(19) Europäisches Patentamt
European Patent Office
Office européen des brevets

(11) **EP 3 890 992 B1**

(12) **FASCICULE DE BREVET EUROPEEN**

(45) Date de publication et mention
de la délivrance du brevet:
**19.02.2025 Bulletin 2025/08**

(21) Numéro de dépôt: **19845818.4**

(22) Date de dépôt: **02.12.2019**

(51) Classification Internationale des Brevets (IPC):
**B60C 1/00** $^{(2006.01)}$ **C08L 7/00** $^{(2006.01)}$
**C08L 15/00** $^{(2006.01)}$ **B60C 11/00** $^{(2006.01)}$

(52) Classification Coopérative des Brevets (CPC):
(C-Sets disponibles)
**B60C 1/0016; B60C 11/0058; C08L 7/00;**
**C08L 15/00;** B60C 2200/02 (Cont.)

(86) Numéro de dépôt international:
**PCT/FR2019/052881**

(87) Numéro de publication internationale:
**WO 2020/115412 (11.06.2020 Gazette 2020/24)**

(54) **BANDE DE ROULEMENT POUR PNEUMATIQUE D'AVION**

LAUFFLÄCHE FÜR EINEN FLUGZEUGREIFEN

TREAD FOR AN AIRCRAFT TYRE

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **04.12.2018 FR 1872317**

(43) Date de publication de la demande:
**13.10.2021 Bulletin 2021/41**

(73) Titulaire: **COMPAGNIE GENERALE DES**
**ETABLISSEMENTS MICHELIN**
**63040 Clermont-Ferrand (FR)**

(72) Inventeurs:
• **CABIOCH, Jean-Luc**
**63040 CLERMONT-FERRAND**
**CEDEX 09 (FR)**
• **ARNOUX, Michael**
**63040 CLERMONT-FERRAND**
**CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 1 477 333 WO-A1-2017/017123**

(52) Classification Coopérative des Brevets (CPC):
(Cont.)

C-Sets
**C08L 15/00, C08L 7/00, C08L 9/06, C08L 91/06,
C08K 3/04, C08K 5/18, C08K 5/09, C08K 3/22,**

**C08K 3/06, C08K 5/47;
C08L 15/00, C08L 7/00, C08L 45/00, C08L 91/06,
C08K 3/04, C08K 3/36, C08K 5/18, C08K 5/09,
C08K 3/22, C08K 3/06, C08K 5/47**

**Description**

La présente invention a pour objet un pneumatique pour avion, et, en particulier, la bande de roulement d'un pneumatique pour avion.

Un pneumatique pour avion est caractérisé par un usage à pression, charge et vitesse élevées. A titre d'exemple, un pneumatique pour avion de dimension 46x17R20, destiné à équiper un avion commercial, peut être utilisé à une pression égale à 15.3 bars, une charge statique égale à 21 tonnes et une vitesse maximale égale à 360 km/h. De façon générale, un pneumatique pour avion est utilisé à une pression supérieure à 9 bars et à un taux de flèche au moins égal à 32%. La pression d'utilisation est définie, par exemple, par la norme de la Tire and Rim Association (TRA). Le taux de flèche d'un pneumatique est, par définition, sa déformation radiale, ou sa variation de hauteur radiale, lorsque celui-ci passe d'un état gonflé non chargé à un état gonflé chargé en statique, dans les conditions de pression et de charge recommandées, par exemple, par la norme de la TRA. Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le rebord de jante. Le diamètre extérieur du pneumatique est mesuré en statique dans un état non chargé gonflé à la pression recommandée.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Les expressions « radialement », « axialement » et « circonférentiellement » signifient respectivement « selon la direction radiale », « selon la direction axiale » et « selon la direction circonférentielle ».

La bande de roulement est la partie du pneumatique destinée à venir en contact avec le sol par l'intermédiaire d'une surface de roulement et s'étendant radialement depuis une surface de fond jusqu'à la surface de roulement, axialement depuis un premier bord jusqu'à un deuxième bord de bande de roulement définissant la largeur axiale de la bande de roulement, et circonférentiellement sur toute la périphérie du pneumatique. Par convention, la largeur axiale de la bande de roulement est définie comme la largeur de l'aire de contact entre la bande de roulement et le sol, mesuré selon la droite axiale passant par le centre de l'aire de contact, lorsque le pneumatique neuf est soumis aux conditions de charge et de pression recommandées par la norme de la TRA. La bande de roulement est généralement constituée d'éléments en relief séparés par des creux. Dans le cas d'un pneumatique pour avion, les éléments en relief sont le plus souvent des nervures circonférentielles continues sur toute la circonférence du pneumatique et séparées par des creux ou sillons circonférentiels. La bande de roulement, qui est la partie usante du pneumatique, comprend au moins une composition de caoutchouc, le plus souvent à base de caoutchouc naturel et de noir de carbone, ces deux éléments principaux conférant à la composition de caoutchouc les propriétés mécaniques nécessaires aux conditions d'usage d'un pneumatique pour avion. En plus de ces éléments principaux, une telle composition de caoutchouc comprend classiquement un système de vulcanisation et des agents de protection.

Radialement à l'intérieur de la bande de roulement, un pneumatique de type radial comprend une armature de renforcement, constituée d'une armature de sommet et d'une armature de carcasse radiale radialement intérieure à l'armature de sommet. L'armature de sommet comprend au moins une couche de sommet constituée par des éléments de renforcement ou renforts enrobés par un mélange élastomérique et parallèles entre eux. L'armature de carcasse radiale comprend au moins une couche de carcasse constituée par des renforts enrobés par un mélange élastomérique, parallèles entre eux et orientés sensiblement radialement, c'est-à-dire formant, avec la direction circonférentielle, un angle compris entre 85° et 95°. Les renforts des couches de sommet et de carcasse, pour les pneumatiques d'avion, sont le plus souvent des renforts textiles, en polyamide aliphatique, tel que le nylon, en polyamide aromatique, tel que l'aramide, ou en matériau hybride combinant, par exemple, un polyamide aliphatique et un polyamide aromatique.

Sur les pneumatiques pour avion, il a été constaté la présence d'une usure non uniforme de la bande de roulement, appelée usure irrégulière, résultant des sollicitations au cours des différentes phases de vie du pneumatique: décollage, roulage et atterrissage. Il a été plus particulièrement mis en évidence une usure différentielle de la bande roulement entre une partie médiane et les deux parties latérales de la bande de roulement, axialement extérieures à la partie médiane, l'usure de cette partie médiane étant plus importante. L'usure différentielle de la partie médiane de la bande de roulement entraîne une limitation de la durée de vie du pneumatique, donc de son utilisation et son retrait prématuré, bien que la bande de roulement ne présente généralement qu'une relativement faible usure des parties latérales de la bande de roulement : ce qui est pénalisant sur le plan économique.

L'homme du métier a mis en évidence deux types d'usure selon la phase de vie du pneumatique. A l'atterrissage, la partie médiane de la bande de roulement, ayant une largeur axiale au moins égale à 50% et au plus égale à 80% de la largeur axiale totale de la bande de roulement et entrant en contact avec le sol, est soumise à une usure appelée « usure toucher », résultant d'un important échauffement thermique, au moment de l'entrée en contact de la surface de roulement avec le sol, en raison du différentiel de vitesses entre la vitesse de rotation du pneumatique et la vitesse de l'avion. En phase de roulage au sol ou « phase taxi », avant le décollage ou après l'atterrissage, les parties latérales de la bande roulement, positionnées axialement de part et d'autre de la partie médiane et ayant chacune une largeur axiale au moins égale à 10% et au plus égale à 25% de la largeur axiale totale de la bande de roulement, sont soumises à une usure appelée « usure taxi », résultant des efforts freineurs exercés sur ces parties latérales du fait de leur vitesse de rotation supérieure à celle de la partie médiane. Ainsi la bande de roulement est principalement usée au niveau de sa partie médiane, à l'atterrissage, et au niveau de ses parties latérales, en phase taxi.

Pour résoudre le problème d'usure irrégulière spécifique aux pneumatiques pour avion, l'homme du métier a cherché, selon une première voie d'action, à optimiser le profil méridien gonflé de la surface de roulement, ce profil méridien étant la coupe méridienne de la surface de roulement d'un pneumatique neuf gonflé à sa pression nominale et non chargé, sans prise en compte des sillons circonférentiels. Optimiser ce profil méridien gonflé, c'est-à-dire sa forme géométrique, permet d'optimiser la forme géométrique de la surface de contact du pneumatique avec le sol et, par conséquent, la répartition des contraintes mécaniques dans cette surface de contact et donc d'agir sur l'usure de la bande de roulement. Par exemple, les documents EP 1 163 120, EP 1 381 525, EP 1 477 333 et EP 2 310 213 décrivent des solutions visant une optimisation du profil gonflé de la surface de roulement, en agissant sur les rigidités d'extension des couches de sommet et/ou de carcasse, ou sur des différentiels de rigidités d'extension entre la partie médiane et les parties latérales des couches de sommet, ou encore sur un profil optimisé de couche de sommet avec une partie médiane concave. Toutes ces solutions sont basées sur des évolutions de matériau et/ou de géométrie des couches de sommet.

Une autre voie d'action sur l'usure d'un pneumatique pour avion est l'optimisation de la ou des compositions de caoutchouc constitutives de la bande de roulement. En effet l'usure dépend également de la ou des compositions de caoutchouc constitutives de la bande de roulement et de leur sensibilité à l'abrasion, caractérisées en particulier par leur cohésion, la cohésion dépendant de la composition chimique. WO 2017/017123 A1 propose par exemple une composition de caoutchouc comprenant un copolymère butadiénique et styrénique fonctionnalisé à l'étain.

Les inventeurs se sont donnés pour objectif, par rapport à un pneumatique d'avion de l'état de la technique, d'augmenter la résistance à l'usure toucher de la partie médiane de la bande de roulement, lors des phases d'atterrissage, tout en conservant le même niveau de résistance à l'usure taxi des parties latérales de la bande de roulement, lors des phases taxi, en agissant sur la ou les compositions de caoutchouc des diverses parties de la bande de roulement.

Cet objectif a été atteint, selon l'invention, par un pneumatique pour avion comprenant une bande de roulement ayant une largeur axiale L, la bande de roulement comprenant :

- une partie médiane ayant une largeur axiale LC au moins égale à 50% et au plus égale à 80% de la largeur axiale L de la bande de roulement et constituée par une composition de caoutchouc médiane, et
- deux parties latérales, positionnées axialement de part et d'autre de la partie médiane, ayant chacune une largeur axiale au moins égale à 10% et au plus égale à 25% de la largeur axiale L de la bande de roulement et constituées chacune par une composition de caoutchouc latérale,

  dans lequel la composition de caoutchouc médiane comprend au moins une matrice élastomérique, une charge renforçante et un système de réticulation, ladite matrice élastomérique comprenant de 25 à 85 pce d'un copolymère butadiénique et styrénique fonctionnalisé à l'étain et de 15 à 75 pce d'élastomère isoprénique, le taux total d'élastomère isoprénique et de copolymère butadiénique et styrénique fonctionnalisé à l'étain dans la composition de caoutchouc médiane étant compris dans un domaine allant de 45 à 100 pce, et
  dans lequel au moins une composition de caoutchouc latérale est différente de la composition de caoutchouc médiane, et
  dans lequel l'au moins une composition de caoutchouc latérale comprend au moins un élastomère diénique, une charge renforçante et un système de réticulation, lequel l'élastomère diénique comprend majoritairement au moins un élastomère isoprénique.

## I- DÉFINITIONS

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente, lorsqu'on décrit un intervalle de valeurs par l'expression "de a à b", on décrit également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

### II-I Bande de roulement et pneumatique

Le pneumatique pour avion selon l'invention comprend une bande de roulement ayant une largeur axiale L, la bande de roulement comprenant :

- une partie médiane ayant une largeur axiale LC au moins égale à 50% et au plus égale à 80% de la largeur axiale L de la bande de roulement et constituée par une composition de caoutchouc médiane, et

- deux parties latérales, positionnées axialement de part et d'autre de la partie médiane, ayant chacune une largeur axiale au moins égale à 10% et au plus égale à 25% de la largeur axiale L de la bande de roulement et constituées chacune par une composition de caoutchouc latérale.

Il est à noter que les parties latérales de la bande de roulement peuvent avoir des largeurs axiales différentes et/ou ont des compositions de caoutchouc latérales différentes.

De préférence, les deux parties latérales 41, 42, positionnées axialement de part et d'autre de la partie médiane 3, sont différentes de la composition de caoutchouc médiane. Avantageusement, les deux parties latérales 41, 42, positionnées axialement de part et d'autre de la partie médiane 3, sont constituées par des compositions de caoutchouc latérales identiques et/ou ont des largeurs axiales ($L_{S1}$, $L_{S2}$) identiques.

Le pneumatique selon l'invention peut avantageusement comprendre une couche intercalaire 7 constituée par une composition de caoutchouc en contact par une face radialement extérieure avec au moins la portion médiane 3 de la bande de roulement 2 et par une face radialement intérieure avec l'armature de sommet 5. Un contact de la face radialement extérieure de la couche intercalaire avec au moins la portion médiane de la bande de roulement signifie que la largeur axiale de ce contact est au moins égale à la largeur axiale $L_C$ de la portion médiane de la bande de roulement. Un contact de la face radialement intérieure de la couche intercalaire avec l'armature de sommet est un contact avec l'armature de protection, qui est la partie de l'armature de sommet la plus radialement extérieure destinée à protéger l'armature de travail, qui est la partie de l'armature de sommet la plus radialement intérieure. Cette couche intercalaire, appelée également couche de liaison, garantit une meilleure liaison entre la bande de roulement comprenant une composition de caoutchouc selon l'invention et l'armature de sommet.

L'armature de carcasse d'un pneumatique d'avion comprend généralement une armature carcasse 6 constitué d'une pluralité de couches de carcasse s'étendant entre les deux bourrelets et réparties entre une première et une deuxième famille.

La première famille est constituée par des couches de carcasse, s'enroulant, dans chaque bourrelet, de l'intérieur vers l'extérieur du pneumatique, autour d'un élément de renforcement circonférentiel, appelé tringle, pour former un retournement dont l'extrémité est généralement radialement extérieure au point le plus radialement extérieur de la tringle. Le retournement est la portion de couche de carcasse comprise entre le point le plus radialement intérieur de la couche de carcasse et son extrémité. Les couches de carcasse de la première famille sont les couches de carcasse les plus proches de la cavité intérieure du pneumatique et donc les plus axialement intérieures, dans les flancs.

La deuxième famille est constituée par des couches de carcasse s'étendant, dans chaque bourrelet, de l'extérieur vers l'intérieur du pneumatique, jusqu'à une extrémité généralement radialement intérieure au point le plus radialement extérieur de la tringle. Les couches de carcasse de la deuxième famille sont les couches de carcasse les plus proches de la surface extérieure du pneumatique et donc les plus axialement extérieures, dans les flancs.

Usuellement, les couches de carcasse de la deuxième famille sont positionnées, sur toute leur longueur, à l'extérieur des couches de carcasse de la première famille, c'est-à-dire qu'elles enveloppent, en particulier, les retournements des couches de carcasse de la première famille. Chaque couche de carcasse de la première et de la deuxième famille est constituée d'éléments de renforcement parallèles entre eux, faisant, avec la direction circonférentielle, un angle compris entre 80° et 100°.

Les éléments de renforcement des couches de carcasse d'un pneumatique d'avion sont le plus souvent des câbles constitués de filés de filaments textiles, préférentiellement en polyamide aliphatique ou en polyamide aromatique, et caractérisés par leurs propriétés mécaniques en extension. Les éléments de renforcement textiles subissent une traction sur une longueur initiale de 400 mm à une vitesse nominale de 200 mm/min. Tous les résultats sont une moyenne de 10 mesures.

Le pneumatique selon l'invention peut comprendre un nombre de couches carcasse allant de 2 à 12, de préférence de 5 à 10.

Les pneumatiques selon la présente invention peuvent être utilisés sur tout type d'avion. Ils sont particulièrement intéressants pour les avions utilisant des pneumatiques à grandes dimensions. En effet, plus la dimension d'un pneumatique d'avion est importante plus l'impact de l'usure à l'atterrissage sur l'usure globale du pneumatique sera important. Ainsi, selon l'invention, le pneumatique peut avoir une dimension supérieure à 18 pouces, de préférence de 20 à 23 pouces.

II-2 Composition de caoutchouc médiane

*II-2-a Matrice élastomérique*

Selon l'invention, la matrice élastomérique de la composition de caoutchouc médiane comprenant de 25 à 85 partie en poids pour cent parties en poids d'élastomère, pce, d'un copolymère butadiénique et styrénique fonctionnalisé à l'étain et de 15 à 75 pce d'élastomère isoprénique, le taux total d'élastomère isoprénique et de copolymère butadiénique et styrénique fonctionnalisé à l'étain dans la composition de caoutchouc médiane étant compris dans un domaine allant de 45 à 100 pce.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse, de préférence du caoutchouc naturel. Par exemple, le polyisoprène de synthèse, peut être un polyisoprène ayant un taux (% molaire) de liaisons cis-1,4 supérieur à 90%, plus préférentiellement encore supérieur à 98%.

Les élastomères utilisés dans le cadre de la présente invention peuvent être par exemple à blocs, statistiques, séquencés, microséquencés, et être préparés en dispersion ou en solution ; ils peuvent être couplés et/ou étoilés et/ou fonctionnalisés avec un agent de couplage et/ou d'étoilage et/ou de fonctionnalisation.

De préférence, selon l'invention, le taux d'élastomère isoprénique peut être compris dans un domaine allant de 20 à 70 pce, de préférence de 20 à 65 ou de 30 à 65 pce, de préférence de 25 à 60 pce, de préférence de 25 à 50 pce.

L'élastomère isoprénique peut être choisi dans le groupe comprenant le caoutchouc naturel, le polyisoprène synthétique et leur mélange. De préférence, l'élastomère isoprénique est du caoutchouc naturel.

Au sens de la présente invention on appelle copolymère d'unité butadiéniques et d'unités styréniques tout copolymère obtenu par copolymérisation d'un ou plusieurs butadiène(s) avec un ou plusieurs composés styréniques. A titre de composés styréniques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Ces élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution.

Le copolymère butadiénique et styrénique fonctionnalisé à l'étain (Sn), c'est-à-dire comportant des liaisons C-Sn (appelée aussi fonctionnalisation Sn), peut être fonctionnalisé simplement (liaisons C-Sn en bout de chaine) et/ou couplé (atome Sn entre deux chaines) et/ou étoilé (atome Sn entre 3 chaines ou plus) avec un agent de fonctionnalisation et/ou de couplage et/ou d'étoilage. De manière générique on parle pour rassembler tous ces élastomères liés à de l'étain, d'élastomères fonctionnalisés à l'étain. Ces élastomères sont connus de l'homme du métier, par exemple ceux décrits dans le document WO 2011/042507.

D'autres types de fonctionnalisation existent pour les copolymères styréniques et butadiéniques, tels que des groupes fonctionnels silanol ou polysiloxane ayant une extrémité silanol, ou bien les copolymères styréniques et butadiéniques époxydés. De telles fonctionnalisations sont possibles dans le cadre de la présente invention en plus de celle à l'étain.

L'homme du métier connait bien les agents de fonctionnalisation et/ou de couplage et/ou d'étoilage utilisable dans le cadre de la présente invention. A titre d'exemple d'agent de fonctionnalisation, on peut citer les agents de fonctionnalisation dérivés de l'étain pouvant répondre à la formule générale $(X^1_1R^1_2Sn)\text{-}O\text{-}(SnR^1_{3\text{-}y}X^1_y)$ ou $(X^1_1R^1_2Sn)\text{-}O\text{-}(CH2)_n\text{-}O\text{-}(SnR^1_{3\text{-}y}X^1_y)$, où y représente un entier de valeur 0 ou 1, $R^1$ représente un radical alkyle, cycloalkyle, aryle, alkaryle ou vinyle ayant de 1 à 12 atomes de carbone, de préférence un butyle, $X^1$ est un atome d'halogène, de préférence le chlore, et n représente un entier de 1 à 20, de préférence 4. Par ailleurs, à titre d'agents de couplage ou d'étoilage à l'étain, on peut citer les dérivés de l'étain de formule $SnRxX_4\text{-}x$, x représentant un nombre entier de valeur 0 à 2, R représentant un radical alkyle, cycloalkyle, aryle, alkaryle, aralkyle, vinyle ayant de 1 à 10 atomes de carbone, de préférence un radical alkyle ayant de 1 à 4 atomes de carbone, et X est un atome d'halogène, de préférence le chlore. A titre de dérivés de l'étain préférentiels, on peut citer le dichlorure de dibutyl étain ou encore tétrachlorure d'étain, ce dernier étant tout particulièrement préféré.

Le copolymère butadiénique et styrénique fonctionnalisé à l'étain, peut être obtenu de manière connue en soi par réaction d'un dérivé de l'étain sur le copolymère butadiénique et styrénique. La préparation d'un élastomère diénique étoilé est par exemple décrit dans le brevet US 3,393,182.

Le copolymère butadiénique et styrénique fonctionnalisé à l'étain est préférentiellement un copolymère statistique de butadiène-styrène (SBR). On parlera alors de SBR fonctionnalisé à l'étain (Sn-SBR). Il peut s'agir par exemple d'un SBR préparé en émulsion ("ESBR") ou d'un SBR préparé en solution ("SSBR"). Avantageusement, le copolymère butadiénique et styrénique fonctionnalisé à l'étain est un copolymère statistique de butadiène-styrène préparé en solution (SSBR). Les teneurs en liaisons vinyliques (-1,2), trans-1,4 et cis-1,4 de la partie butadiénique du SBR peuvent être variables. Par exemple, la teneur en vinyle peut être comprise entre 15% et 80% (% molaire), la teneur en liaisons trans-1,4 comprise entre 15% et 80% (% molaire).

De préférence, le copolymère butadiénique et styrénique fonctionnalisé à l'étain est un copolymère butadiénique et styrénique fonctionnalisé à l'étain à faible taux de styrène. Le taux de styrène du copolymère butadiénique et fonctionnalisé à l'étain styrénique à faible taux de styrène peut être compris dans un domaine allant de 5 à 25%, de préférence de 5 à 20%, de préférence encore de 10 à 19%.

Avantageusement, le copolymère butadiénique et styrénique fonctionnalisé à l'étain présente une température de transition vitreuse comprise dans un domaine allant de - 70°C à -30°C.

De préférence, selon l'invention, le taux de copolymère butadiénique et styrénique fonctionnalisé à l'étain est compris dans un domaine allant de 30 à 80 pce, de préférence de 35 à 80 pce ou de 35 à 70 pce, de préférence de 40 à 75 pce, de préférence de 50 à 75 pce.

Le taux total d'élastomère isoprénique et de copolymère butadiénique et styrénique fonctionnalisé à l'étain peut être de 100 pce. En d'autres termes, selon ce mode de réalisation, la matrice élastomérique de la composition de la bande de roulement du pneumatique d'avion selon l'invention comprend exclusivement de l'élastomère isoprénique et du copolymère butadiénique et styrénique fonctionnalisé à l'étain.

Alternativement, le taux total d'élastomère isoprénique et de copolymère butadiénique et styrénique fonctionnalisé à l'étain peut également être compris dans domaine allant de 45 à moins de 100 pce. En d'autres termes, selon ce mode de réalisation, la matrice élastomérique de la composition de la bande de roulement du pneumatique d'avion selon l'invention comprend de plus de 0 à 55 pce d'un autre élastomère diénique en plus de l'élastomère isoprénique et du copolymère butadiénique et styrénique fonctionnalisé à l'étain. Le taux total d'élastomère isoprénique et de copolymère butadiénique et styrénique fonctionnalisé à l'étain peut être, par exemple, compris dans domaine allant de 50 à moins de 100 pce, de préférence de 45 à 90 pce, de préférence de 70 à 80 pce.

Par "autre élastomère diénique", on entend un élastomère diénique différent d'élastomère isoprénique et de copolymère butadiénique et styrénique fonctionnalisé à l'étain.

Par élastomère "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques sont bien connus de l'homme de l'art et on entend plus particulièrement par élastomère diénique susceptible d'être utilisé dans les compositions :

- tout homopolymère obtenu par polymérisation d'un monomère diène conjugué ayant de 4 à 12 atomes de carbone ;

- tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, le vinylmésitylène, le divinylbenzène, le vinylnaphtalène.

De préférence, selon ce mode de réalisation de l'invention, l'autre élastomère diénique peut être choisi dans le groupe comprenant ou constitué par les copolymères butadiéniques et styréniques non-fonctionnalisés à l'étain, les polybutadiènes et leurs mélanges.

Le copolymère butadiénique et styrénique non-fonctionnalisé à l'étain peut être, par exemple, du copolymère butadiène-styrène (SBR). Il peut s'agir par exemple d'un SBR préparé en émulsion ("ESBR") ou d'un SBR préparé en solution ("SSBR"). Les teneurs en liaisons vinyliques (-1,2), trans-1,4 et cis-1,4 de la partie butadiénique du SBR peuvent être variables. Par exemple, la teneur en vinyle peut être comprise entre 15% et 80% (% molaire), la teneur en liaisons trans-1,4 comprise entre 15% et 80% (% molaire).

De préférence, selon ce mode de réalisation de l'invention, l'autre élastomère diénique comprend majoritairement un polybutadiène.

Préférentiellement, le polybutadiène peut être par exemple un polybutadiène comprenant majoritairement des liaisons cis-1,4. Il peut s'agir par exemple d'un polybutadiène composite comprenant 5 à 25% de polybutadiène 1,2 syndiotactique dans une matrice de polybutadiène cis-1,4, par exemple du « VCR412 UBEPOL » de la société UBE, comprenant 12% de polybutadiène 1,2 syndiotactique dans une matrice de polybutadiène 1,4 cis.

Le taux de l'autre élastomère diénique peut dépendre de la nature de cet autre élastomère diénique. Ce taux peut être compris dans un domaine allant de plus de 0 à 50 pce, de préférence de 10 à 55 pce, de préférence de 20 à 30 pce.

En particulier, lorsque l'autre élastomère diénique comprend majoritairement un polybutadiène comprenant majoritairement des liaisons cis-1,4, le taux d'élastomère diénique peut être compris dans un domaine allant de 10 à 30 pce, de préférence de 15 à 25 pce.

Lorsque l'autre élastomère diénique comprend majoritairement du polybutadiène composite comprenant 5 à 25% de polybutadiène 1,2 syndiotactique dans une matrice de polybutadiène cis-1,4, le taux de l'autre élastomère diénique est compris dans un domaine allant de 10 à 55 pce, de préférence de 30 à 55 pce, de préférence de 40 à 55 pce, de préférence de 45 à 50 pce.

*II-2-b Charge renforçante*

La composition de caoutchouc médiane de la bande de roulement du pneumatique selon l'invention comprend en outre une charge renforçante, connue pour ses capacités à renforcer une composition de caoutchouc utilisable pour la fabrication de pneumatiques.

La charge renforçante peut comprendre du noir de carbone et/ou une charge inorganique renforçante (de préférence une silice). Avantageusement, la charge renforçante comprend majoritairement, de préférence exclusivement, du noir de carbone.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Avantageusement, le noir de carbone comprend majoritairement, de préférence exclusivement, un noir de carbone présentant une surface spécifique BET inférieure à supérieure à 80 $m^2$/g, de préférence comprise dans un domaine allante entre 80 et 170$m^2$/g, de préférence encore entre 120 et 145 $m^2$/g.

La surface spécifique BET des noirs de carbone est mesurée selon la norme D6556-10 [méthode multipoints (au minimum 5 points) - gaz : azote - domaine de pression relative P/P0 : 0.1 à 0.3].

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, préférentiellement la silice (SiO$_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g.

Les silices ou autres charges inorganiques renforçantes utilisables dans le cadre de la présente invention peuvent être toute silice connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g.

La surface spécifique BET de la silice ou charges inorganiques renforçantes est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative p/po : 0.05 à 0.17). La surface spécifique CTAB de la silice est déterminée selon la norme française NF T 45-007 de novembre 1987 (méthode B).

De préférence, la charges inorganiques renforçantes, de préférence la silice, présente une surface spécifique BET inférieure à 200 m$^2$/g et/ou une surface spécifique CTAB est inférieure à 220 m$^2$/g, de préférence une surface spécifique BET comprise dans un domaine allant de 125 à 200 m$^2$/g et/ou une surface spécifique CTAB comprise dans un domaine allant de 140 à 170 m$^2$/g.

A titres de charges inorganiques renforçantes utilisables dans le cadre de la présente invention, on citera par exemple les silices précipitées hautement dispersibles (dites "HDS") « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

Pour coupler la silice renforçante à l'élastomère diénique, on utilise de manière bien connue un agent de couplage (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6,849,754, WO 99/09036, WO 2006/023815, WO 2007/098080, WO 2010/072685 et WO 2008/055986.

On peut citer notamment les composés alkoxysilane-polysulfure, en particulier les polysulfures de bis-(trialkoxylsilylpropyle), tout particulièrement le disulfure de bis 3-triéthoxysilylpropyle (en abrégé "TESPD") et le tétrasulfure de bis 3-triéthoxysilylpropyle (en abrégé "TESPT"). On rappelle que le TESPD, de formule $[(C_2H_5O)_3Si(CH_2)_3S]_2$, est notamment commercialisé par la société Degussa sous les dénominations Si266 ou Si75 (dans le second cas, sous forme d'un mélange de disulfure (à 75% en poids) et de polysulfures). Le TESPT, de formule $[(C_2H_5O)_3Si(CH_2)_5S_2]_2$ est commercialisé notamment par la société Degussa sous la dénomination Si69 (ou X50S lorsqu'il est supporté à 50% en poids sur du noir de carbone), sous la forme d'un mélange commercial de polysulfures Sx avec une valeur moyenne pour x qui est proche de 4.

Le taux de charge renforçante, de préférence de noir de carbone, dans la composition est de préférence compris dans un domaine allant de 20 à 100 pce, de préférence de 25 à 75 pce, de préférence encore de 30 à 70 pce.

Par ailleurs, le taux de charge inorganique renforçante, de préférence de silice, dans la composition est compris dans un domaine allant de 0 à 20 pce, de préférence de 1 à 15 pce.

*II-2-c Système de réticulation*

Le système de réticulation de la composition de caoutchouc médiane de la bande de roulement du pneumatique selon l'invention peut être à base de soufre moléculaire et/ou de donneurs de soufre et/ou de peroxyde, bien connus de l'homme du métier.

Le système de réticulation est préférentiellement un système de vulcanisation à base de soufre (soufre moléculaire et/ou agent donneur de soufre).

Le soufre est utilisé à un taux préférentiel compris entre 0,5 et 10 pce. Avantageusement, le taux de soufre est compris entre 0,5 et 2 pce, de préférence entre 0,5 et 1,5 pce, de préférence encore entre 0,5 et 1,4 pce.

La composition du flanc externe du pneumatique selon l'invention comprend avantageusement un accélérateur de vulcanisation, qui est de préférence choisi dans le groupe constitué par les accélérateurs du type thiazoles ainsi que leurs dérivés, des accélérateurs de types sulfénamides, thiourées et de leurs mélanges. Avantageusement, l'accélérateur de vulcanisation est choisi dans le groupe constitué par le disulfure de 2-mercaptobenzothiazyle (MBTS), le N-cyclohexyl-2-benzothiazyle sulfénamide (CBS), le N,N-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le disulfure de morpholine, le N-morpholino-2-benzothiazyle sulfénamide (MBS), le dibutylthiourée (DBTU), et de leurs mélanges. De manière particulièrement préférée, l'accélérateur primaire de vulcanisation est le N-cyclohexyl-2-benzothiazyle sulfénamide (CBS).

Le taux d'accélérateur de vulcanisation est préférentiellement compris dans un domaine allant de 0,2 à 10 pce, de préférence de 0,5 et 2 pce, de préférence entre 0,5 et 1,5 pce, de préférence encore entre 0,5 et 1,4 pce.

_II-2-d Plastifiants_

Avantageusement, la composition de caoutchouc médiane de la bande de roulement du pneumatique selon l'invention peut comprendre de 1 à 30 pce d'une résine plastifiante majoritairement composée d'unités issues de monomères aromatiques et cycloaliphatiques. Cette résine est également appelée résine aromatique/ cycloaliphatique dans ce qui suit.

Les résines plastifiantes en général, sont connues de l'homme du métier. Elles sont aussi parfois appelées résines hydrocarbonées ou résines de haute température de transition vitreuse.

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile).

Les résines hydrocarbonées sont des polymères bien connus de l'homme du métier, miscibles par nature dans les compositions d'élastomère(s) diénique(s) lorsqu'elles sont qualifiées en outre de "plastifiantes". Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

La résine spécifique pour l'invention est majoritairement composée d'unités issues de monomères aromatiques et cycloaliphatiques.

A titre de monomères cycloaliphatiques on entend selon la présente invention et de manière conventionnelle pour l'homme du métier, les monomères cycliques saturés et on choisira de préférence les monomères dans le groupe constitué par le cyclopentadiène (en abrégé CPD), le dicyclopentadiène (en abrégé DCPD) et leurs mélanges.

A titre de monomères aromatiques, on choisira préférentiellement les monomères dans le groupe constitué par le styrène, l'alpha-méthyl styrène, le vinyl toluène, l'indène et leurs mélanges.

Ainsi, de préférence, la résine hydrocarbonée composée majoritairement d'unités issues de monomères aromatiques et cycloaliphatiques est telle que les monomères cycloaliphatiques sont choisis dans le groupe constitué par le cyclopentadiène, le dicyclopentadiène et leurs mélanges, et les monomères aromatiques sont choisis dans le groupe constitué par le styrène, l'alpha-méthyl styrène, le vinyle toluène, l'indène et leurs mélanges. Plus préférentiellement le monomère aromatique est le styrène.

La résine utile aux besoins de l'invention, majoritairement composée d'unités issues de monomères aromatiques et cycloaliphatiques, peut comprendre, en plus de ces unités, et à titre minoritaire, des unités aliphatiques c'est-à-dire à base de monomères aliphatiques, autres que les monomères cycloaliphatiques. A ce titre, la résine peut comprendre, à titre minoritaire, des unités issues de monomères oléfiniques.

La résine aromatique / cycloaliphatique présente de préférence un taux de proton aromatique compris dans un domaine allant de 3 à 40%, de préférence de 5 à 30%. Elle présente en outre, de préférence, un taux de proton éthylénique compris dans un domaine allant de 2 à 15%, de préférence de 3 à 10%.

De préférence également, la résine aromatique / cycloaliphatique présente un taux de proton éthylénique compris dans un domaine allant de 2 à 15%, de préférence de 3 à 10%.

Selon un mode de réalisation préférentiel, la résine hydrocarbonée utile aux besoins de l'invention présente une température de transition vitreuse (Tg) comprise dans un domaine allant de 30°C à 150°C, de préférence de 30 à 120°C.

La résine hydrocarbonée utile aux besoins de l'invention présente une masse moléculaire moyenne Mn comprise dans un domaine allant de 300 g/mol à 3000g/mol et de préférence de 400 à 1500g/mol.

De préférence, la résine hydrocarbonée utile aux besoins de l'invention présente un indice de polymolécularité (Ip) compris dans un domaine allant de 1 à 4, et préférentiellement de 1,5 à 3,5.

Dans le commerce, il existe de nombreuses résines hydrocarbonées disponibles. Ces résines peuvent présenter des caractéristiques, notamment de composition chimique, de Tg, de Mn, de taux de proton aromatique, éthylénique ou encore d'Ip qui diffèrent selon les fournisseurs. A titre d'exemples de résines plastifiantes aromatiques / cycloaliphatiques on peut citer notamment des résines commerciales « Novares TC160 » (Mn=710g/mol ; Mw=2000g/mol ; Ip=2,8, Tg=106°C), « Novares TC100 » (Mn=460g/mol ; Mw=840g/mol ; Ip=1,8, Tg=42°C) commercialisées par la société Rütgers, les résines « QUINTONE 2940 », (Mn=560g/mol, Mw =1400g/mol, Ip=2,5, Tg =77°C), commercialisée par la société Nippon Zeon, la résine « LX1200-130 » commercialisée par la société Neville (Mn=660 g/mol, Mw=1900g/mol, Ip=2,8, Tg=60°C)

La macrostructure (Mw, Mn, Ip et Mz) de la résine hydrocarbonée est déterminée par chromatographie d'exclusion stérique (SEC) sur la base des normes ISO 16014 (Determination of average molecular mass and molecular mass distribution of polymers using size exclusion chromatography), ASTM D5296 (Molecular Weight Averages and molecular weight distribution of polystyrene by High performance size exclusion chromatography), et DIN 55672 (chromatographie d'exclusion stérique).

Pour ces mesures, l'échantillon de résine est solubilisé dans du tetrahydrofurane non antioxydé jusqu'à une concentration de 1,5 g/l. La solution est filtrée avec un filtre téflon de porosité de 0,45 $\mu$m, en utilisant par exemple une seringue à usage unique montée d'un filtre. Un volume de 100 $\mu$l est injecté à travers un jeu de colonnes de chromatographie d'exclusion stérique. La phase mobile est éluée avec un débit de 1 ml/min. Les colonnes sont thermostatées dans un four à 35°C. La détection est assurée par un réfractomètre thermostaté à 35°C. La phase stationnaire des colonnes est à base d'un gel de polystyrène divinylbenzène à porosité maîtrisée. Les chaînes polymères sont séparées selon la taille qu'elles occupent quand elles sont solubilisées dans le solvant: plus elles occupent un volume important, moins les pores des colonnes leur sont accessibles et plus leur temps d'élution est faible.

Une courbe d'étalonnage de Moore reliant le logarithme de la masse molaire (logM) au temps d'élution (te) est préalablement réalisée avec des étalons polystyrène, et modélisée par un polynome d'ordre 3 : Log (masse molaire de polystyrène) = a + b te + c te2 + d te3.

Pour la courbe d'étalonnage on utilise des étalons de polystyrène à distributions moléculaires étroites (indice de polymolécularité, Ip, inférieur ou égal à 1,1). Le domaine de masses molaires de ces étalons s'étend de 160 à environ 70 000 g/mol. Ces étalons peuvent être rassemblés par « familles » de 4 ou 5 étalons ayant un incrément d'environ 0,55 en log de M entre chaque.

On peut utiliser des kits étalons certifiés (ISO 13885 et DIN 55672) comme par exemple les kits de vials de la société PSS (polymer standard service, référence PSS-pskitr1l-3), ainsi qu'un PS étalon supplémentaire de Mp = 162 g/mol (Interchim, référence 178952). Ces kits se présentent sous la forme de 3 vials contenant chacun une famille de polystyrène étalons dans des quantités adaptées :

- Vial noir : Mp = 1 220, 4 850, 15 500 et 67 500 g/mol.

- Vial bleu : Mp = 376, 3 470, 10 400, 46 000 g/mol.

- Vial jaune : Mp = 266, 1 920, 7 200, 28 000 g/mol.

- PS162 : Mp = 162 g/mol

Les masses molaires moyennes en nombre (Mn), en masse (Mw), la Mz, et la polydispersité de la résine analysée sont calculées à partir de cette courbe d'étalonnage. C'est pourquoi, on parle de masses molaires relatives à un étalonnage polystyrène.

Pour le calcul des masses moyennes et de l'Ip, on définit sur le chromatogramme correspondant à l'injection de l'échantillon les bornes d'intégration de l'élution du produit. On « découpe » le signal réfractométrique défini entre les 2 bornes d'intégration toutes les secondes. On relève pour chacune des "découpes élémentaires", le temps d'élution ti et l'aire du signal du détecteur Ai.

On rappelle ici que : Ip = Mw/Mn avec Mw masse moléculaire moyenne en poids, et Mn masse moléculaire en nombre. On rappelle également que les masses Mw, Mn et Mz sont des masses moyennes calculées d'après les formules ci-dessous :

$$Mz = \frac{\sum Ai * Mi^2}{\sum Ai * Mi}$$

$$Mn = \frac{\sum Ai}{\sum \frac{Ai}{Mi}}$$

$$Mw = \frac{\sum Ai * Mi}{\sum Ai}$$

dans lesquelles Ai est l'amplitude du signal du détecteur réfractométrique correspondant à la masse Mi et au temps d'élution ti.

Le matériel utilisé pour la mesure de SEC est une chaîne de chromatographie en phase liquide par exemple la chaîne Alliance 2690 de WATERS comprenant une pompe, un dégazeur et un injecteur ; un réfractomètre différentiel (par exemple le réfractomètre 2410 de WATERS), un logiciel d'acquisition et de traitement des données, par exemple le logiciel EMPOWER de WATERS, un four à colonnes, par exemple le WATERS « columns Heater Module » et 4 colonnes montées en série dans l'ordre suivant :

Tableau 1

| Numéro | Marque | Domaine de masses molaires (g/mol) | Longueur (mm) | Diamètre interne (mm) | Taille des particules ($\mu$m) | Désignation commerciale | Références (à titre indicatif) |
|---|---|---|---|---|---|---|---|
| Colonnes 1 et 2 | Polymer Laboratories | 200 - 400000 | 300 | 7,5 | 5 | MIXED-D | PL1110-6504 |
| Colonnes 3 et 4 | Polymer Laboratories | 200 - 30000 | 300 | 7,5 | 3 | MIXED-E | PL1110-6300 |

Le taux de proton aromatique (%HA) et le taux de proton éthylénique (%HE) sont mesurés par RMN 1H. Cette détermination est réalisée par rapport à l'ensemble des signaux détectés. Ainsi, les résultats obtenus sont exprimés en % d'aire de pic.

Les échantillons sont solubilisés dans le chloroforme deutéré (CDCl3) à raison d'environ 10mg de résine dans environ 1mL de solvant. Les spectres sont acquis sur un spectromètre Avance 500 MHz Bruker équipé d'une sonde "large bande" BBO z-grad 5 mm Bruker. L'expérience RMN 1H utilise une séquence simple impulsion 30° et un délai de répétition de 5 secondes entre chaque acquisition. 64 accumulations sont réalisées à température ambiante. Les déplacements chimiques sont calibrés par rapport à l'impureté protonée du chloroforme deutéré ; $\delta$ppm 1H à 7,20 ppm. Les signaux RMN 1H des protons aromatiques sont situés entre 8,5ppm et 6,2ppm. Les protons éthyléniques quant à eux engendrent des signaux entre 6,2ppm et 4,5ppm. Enfin, les signaux correspondant aux protons aliphatiques sont situés entre 4,5ppm et 0ppm. Les aires de chaque catégorie de protons sont rapportées à la somme de ces aires pour ainsi donner une répartition en % d'aire de chaque catégorie de protons.

Le taux de résine aromatique / cycloaliphatique est préférentiellement compris dans un domaine allant de 2 à 30 pce, plus préférentiellement de 2 à 15 pce.

De préférence pour l'invention, la composition de la bande de roulement du pneumatique d'avion de l'invention ne comprend pas d'autre résine que la résine C5 décrite ci-dessus.

A titre d'exemple de résines plastifiantes aromatiques/ cycloaliphatiques, on peut citer notamment des résines commerciales «Novares TC160 » (Mn=710g/mol ; Mw=2000g/mol ; Ip=2,8, Tg=106°C), « Novares TC100 » (Mn=460g/mol ; Mw=840g/mol ; Ip=1,8, Tg=42°C) commercialisées par la société Rütgers.

Selon un mode de réalisation particulier, la résine plastifiante majoritairement composée d'unités issues de monomères aromatiques et cycloaliphatiques un taux de proton aromatique compris entre 0 et 12%, un taux de proton éthylénique supérieur à 3%, une masse moyenne moléculaire en nombre supérieure à 500 g/mol et un indice de polymolécularité supérieur à 2.

Selon ce mode de réalisation, la résine aromatique / cycloaliphatique présente un taux de proton aromatique compris entre 0 et 12%, de préférence un taux de proton aromatique compris dans un domaine allant de 1 à 10%, de préférence de 2 à 7%.

Par ailleurs, selon ce mode de réalisation, la résine aromatique / cycloaliphatique présente un taux de proton éthylénique supérieur à 3%, de préférence un taux de proton éthylénique compris dans un domaine allant de 3 à 7%.

Selon ce mode de réalisation, la résine hydrocarbonée utile aux besoins de l'invention peut avantageusement présenter une température de transition vitreuse (Tg) comprise dans un domaine allant de 30°C à 150°C, de préférence de 30 à 120°C.

Toujours selon ce mode de réalisation, la résine hydrocarbonée utile aux besoins de l'invention peut avantageusement présenter une masse moléculaire moyenne en nombre (Mn) supérieure à 500 g/mol, de préférence comprise dans un domaine allant de 500 g/mol à 1500g/mol et de préférence de 500 à 1000g/mol.

Selon ce mode de réalisation, la résine hydrocarbonée utile aux besoins de l'invention peut avantageusement présenter un indice de polymolécularité (Ip) supérieur à 2, de préférence compris dans un domaine allant de 2 à 5, et préférentiellement de 3 à 4,5.

Selon ce mode de réalisation, la résine hydrocarbonée composée majoritairement composée d'unités issues de monomères aromatiques et cycloaliphatiques, comprend avantageusement en outre des unités provenant des dérivés du pin, préférentiellement choisies dans le groupe constitués par l'alphapinène, le bétapinène, la colophane, la térébenthine, le tallol et leurs mélanges. Selon ce mode préférentiel, la résine est aussi préférentiellement modifiée par de l'anhydride maléique.

A titre d'exemple de résines plastifiantes aromatiques/ cycloaliphatiques répondant à ce mode de réalisation, on peut citer notamment la résine hydrocarbonée DCPD/Aromatique « Nevroz 1420 » de la société Neville.

Avantageusement, quel que soit le mode de réalisation de la présente invention, la composition de caoutchouc médiane comprend 0 à 20 pce d'un plastifiant liquide.

Un plastifiant est considéré comme liquide lorsque, à 23°C, il a la capacité de prendre à terme la forme de son contenant, cette définition étant donnée par opposition aux résines plastifiantes qui sont par nature solides à température ambiante. Comme plastifiant liquide, on peut citer les huiles végétales, les huiles minérales, les plastifiants éthers, esters, phosphates, sulfonates et leurs mélanges.

Préférentiellement, le taux de plastifiant liquide de la composition de caoutchouc médiane est égal à 0.

_II-2-e Additifs divers_

Les compositions de caoutchouc de la bande de roulement du pneumatique selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

II-3 Composition de caoutchouc latérale

Selon l'invention, au moins une composition de caoutchouc latérale est différente de la composition de caoutchouc médiane. La différence est avantageusement liée à l'absence de copolymère butadiénique et styrénique fonctionnalisé à l'étain, ou par sa présence à un taux inférieur à 25 pce.

Ainsi, avantageusement, la composition de caoutchouc latérale ne comprend pas de de copolymère butadiénique et styrénique fonctionnalisé à l'étain, ou en comprend moins de 25 pce, de préférence moins de 15 pce, de préférence encore moins de 10 pce. De manière particulière avantageuse, la composition de caoutchouc latérale ne comprend pas de de copolymère butadiénique et styrénique fonctionnalisé à l'étain.

L'au moins une composition de caoutchouc latéral comprend au moins un élastomère diénique, une charge renforçante et un système de réticulation, lequel l'élastomère diénique comprend majoritairement au moins un élastomère isoprénique.

De manière particulièrement avantageuse, la composition de caoutchouc latérale comprend plus de 85 pce, de préférence au moins 90 pce d'au moins un élastomère isoprénique. De préférence encore, elle comprend 100 pce d'au moins un élastomère isoprénique.

L'élastomère isoprénique de la composition de caoutchouc latérale peut être choisi dans le groupe constitué par le caoutchouc naturel, les polyisoprènes de synthèse et leurs mélanges. De préférence l'au moins un élastomère isoprénique de la composition de caoutchouc latérale est un caoutchouc naturel.

La composition de caoutchouc latérale comprend également avantageusement une ou plusieurs charges renforçantes, de préférence choisie parmi les noirs de carbones, les silices et leurs mélanges, de préférence à un taux compris dans un domaine allant de 20 à 200 pce, de préférence de 20 à 70 pce, de préférence encore de 40 à 55 pce. Avantageusement, la charge renforçante comprend majoritairement, de préférence exclusivement du noir de carbone. Le noir de carbone de la composition de caoutchouc latérale présente avantageusement une surface spécifique BET inférieure à supérieure à 80 $m^2$/g, de préférence comprise dans un domaine allante entre 80 et 170$m^2$/g, de préférence encore entre 120 et 145 $m^2$/g.

La composition de caoutchouc latérale comprend avantageusement un système de réticulation à base de soufre moléculaire et/ou de donneurs de soufre et/ou de peroxyde, de préférence à base de souffre moléculaire et/ou de donneurs de soufre, de préférence à un taux compris entre 0,5 et 12 pce, de préférence entre 1 et 10 pce.

Enfin, la composition de caoutchouc latérale peut comprendre tout ou partie des additifs usuels habituellement utilisés dans les compositions d'élastomères pour pneumatique tels que ceux précédemment cités.

II-4 Composition de caoutchouc de la couche intercalaire

Le pneumatique comprenant une armature de sommet radialement intérieure à la bande de roulement, le pneumatique comprend avantageusement une couche intercalaire constituée par une composition de caoutchouc en contact par une face radialement extérieure avec au moins la portion médiane de la bande de roulement et par une face radialement intérieure avec l'armature de sommet. Un contact de la face radialement extérieure de la couche intercalaire avec au moins la portion médiane de la bande de roulement signifie que la largeur axiale de ce contact est au moins égale à la largeur axiale $L_C$ de la portion médiane de la bande de roulement. Un contact de la face radialement intérieure de la couche intercalaire avec l'armature de sommet est un contact avec l'armature de protection, qui est la partie de l'armature de sommet la plus radialement extérieure destinée à protéger l'armature de travail, qui est la partie de l'armature de sommet la plus radialement intérieure. Cette couche intercalaire, appelée également couche de liaison, garantit une meilleure liaison entre la bande de roulement comprenant une composition de caoutchouc selon l'invention et l'armature de sommet.

La couche intercalaire comprend avantageusement au moins un élastomère diénique, une charge renforçante et un système de réticulation, lequel l'élastomère diénique comprend majoritairement au moins un élastomère isoprénique.

De manière particulièrement avantageuse, la couche intercalaire est telle que définie, de préférence identique à, la composition de caoutchouc latérale de la bande de roulement du pneumatique selon l'invention.

La couche intercalaire peut ainsi comprend plus de 85 pce, de préférence au moins 90 pce d'au moins un élastomère isoprénique. De préférence encore, elle comprend 100 pce d'au moins un élastomère isoprénique.

L'élastomère isoprénique de la couche intercalaire peut être choisi dans le groupe constitué par le caoutchouc naturel, les polyisoprènes de synthèse et leurs mélanges. De préférence l'au moins un élastomère isoprénique de la couche intercalaire est un caoutchouc naturel.

La couche intercalaire comprend également avantageusement une ou plusieurs charges renforçantes, de préférence choisie parmi les noirs de carbones, les silices et leurs mélanges, de préférence à un taux compris dans un domaine allant de 20 à 200 pce, de préférence de 20 à 70 pce, de préférence encore de 40 à 55 pce. Avantageusement, la charge renforçante comprend majoritairement, de préférence exclusivement du noir de carbone.

La couche intercalaire comprend avantageusement un système de réticulation à base de soufre moléculaire et/ou de donneurs de soufre et/ou de peroxyde, de préférence à base de souffre moléculaire et/ou de donneurs de soufre, de préférence à un taux compris entre 0,5 et 12 pce, de préférence entre 1 et 10 pce.

Enfin, la couche intercalaire peut comprendre tout ou partie des additifs usuels habituellement utilisés dans les compositions d'élastomères pour pneumatique tels que ceux précédemment cités.

II-5 Préparation des compositions de caoutchouc

Les compositions de caoutchouc médianes, latérale de la bande de roulement et la composition de la couche intercalaire du pneumatique selon l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.

- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudé avec une autre composition de caoutchouc) sous la forme d'un semi-fini (ou profilé) de caoutchouc utilisable par exemple comme une bande de roulement de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

## III- BREVE DESCRIPTION DES FIGURES

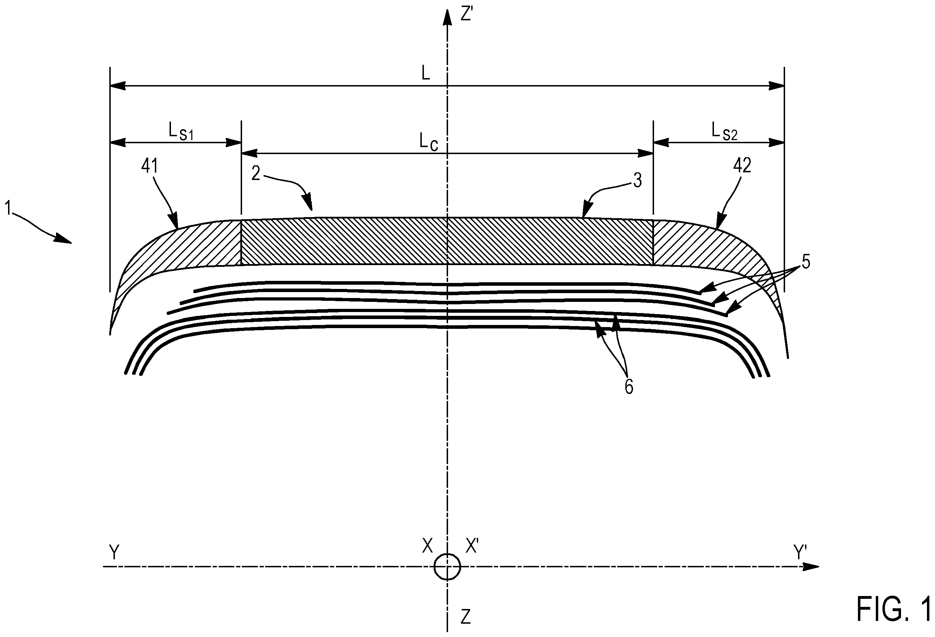

La figure 1, non représentée à l'échelle pour en faciliter la compréhension présente une vue en coupe dans un plan méridien du sommet d'un pneumatique pour avion selon l'invention, comprenant radialement de l'extérieur vers l'intérieur une bande de roulement 2, une armature de sommet 5 et une armature de carcasse 6. La bande de roulement 2 ayant une largeur axiale L comprend une partie médiane 3, ayant une largeur axiale $L_C$ au moins égale à 50% et au plus égale à 80% de la largeur axiale L de la bande de roulement et constituée par une composition de caoutchouc médiane, et deux parties latérales 41, 42, positionnées axialement de part et d'autre de la partie médiane 3, ayant chacune une largeur axiale ($L_{S1}$, $L_{S2}$) au moins égale à 10% et au plus égale à 25% de la largeur axiale L de la bande de roulement et constituées chacune par une composition de caoutchouc latérale.

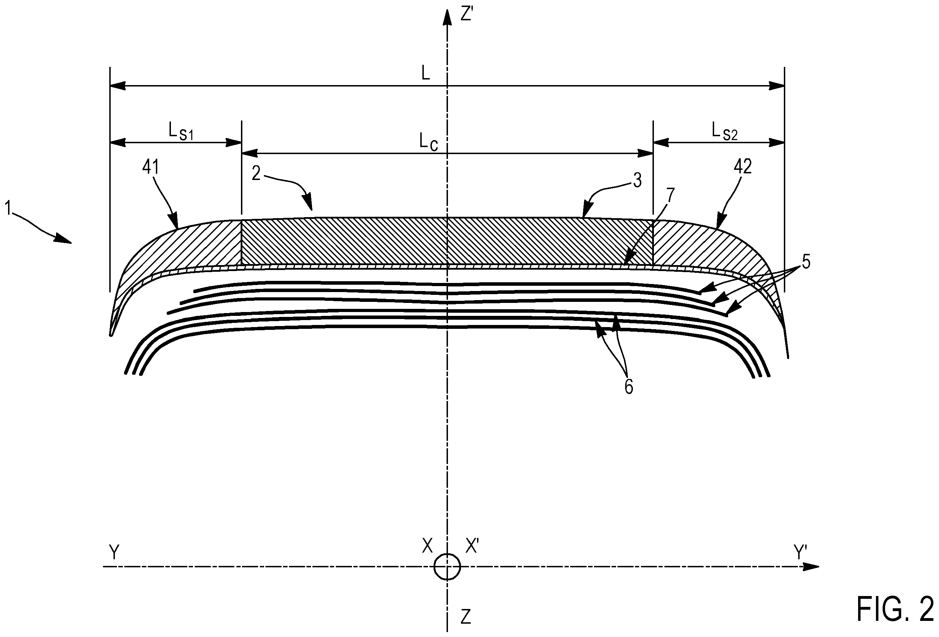

La figure 2 présente une vue en coupe dans un plan méridien du sommet d'un pneumatique pour avion selon un mode de réalisation particulier de l'invention, dans lequel le pneumatique 1 comprend également une couche intercalaire 7 constituée par une composition de caoutchouc en contact par une face radialement extérieure avec la bande de roulement 2 et par une face radialement intérieure avec l'armature de sommet 5.

## V- EXEMPLES

### V-1 Mesures et tests utilisés

*Essais de traction (Exemples 1 et 2)*

Ces essais de traction permettent de déterminer les modules d'élasticité et les propriétés à la rupture et sont basées sur la norme NF ISO 37 de Décembre 2005 sur une éprouvette haltère de type 2. L'allongement rupture ainsi mesuré à 60°C est exprimé en % d'allongement.

*Essais de traction (Exemples 3 et 4)*

Ces essais permettent de déterminer les contraintes d'élasticité et les propriétés à la rupture; ceux effectués sur les mélanges cuits sont réalisés conformément à la norme AFNOR-NF-T46-002 de septembre 1988.

On mesure les allongements à la rupture (en %) à deux températures : à 23°C et à 100°C, dans les conditions normales d'hygrométrie (50% d'humidité relative), selon la norme française NF T 40-101 (décembre 1979), les contraintes à la rupture (en MPa) et l'énergie à la rupture peuvent également être mesurées, l'énergie à la rupture (Energie Rupture) étant le produit de la contrainte à la rupture et de l'allongement à la rupture. Les résultats sont données en base 100, c'est-à-dire qu'on exprime les valeurs par rapport à un témoin, dont l'allongement rupture est considéré comme la référence à 100.

*Perte de masse*

Cet essai permet de déterminer la perte de masse d'un échantillon de composition de bande de roulement de pneumatique d'avion, lorsqu'il est soumis à un test d'abrasion sur un abrasimètre à haute vitesse.

Le test d'abrasion à haute vitesse est réalisé selon le principe décrit dans l'article de S. K. Clark « Touchdown dynamics », Precision Measurement Company, Ann Arbor, MI, NASA, 35 Langley Research Center, Computational Modeling of Tires pages 9-19 publié en août 1995. Le matériau de bande de roulement frotte sur une surface telle qu'un disque Norton Vulcan A30S-BF42. La vitesse linéaire lors du contact est de 70 m/s avec une pression moyenne de contact de 15 à 20 bars. Une l'énergie de 10 à 20 MJ/m2 de surface de contact est mise en jeu durant l'expérience.

Les éléments du dispositif de tribométrie à énergie constante selon l'article de S.K. Clark mentionné ci-dessus sont un moteur, un embrayage, un plateau tournant et un porte échantillon.

Eléments du dispositif de tribométrie à énergie constante selon l'article de S.K. Clark mentionné ci-dessus :

- roulette (anneau torique en matériau de test monté sur une poulie à gorge)
- plateau tournant, par exemple constitué d'un disque Norton solidaire de l'axe d'un moteur électrique et d'un volant d'inertie

La performance est évaluée sur la base de la perte de masse selon la formule suivante :

[Performance perte de masse = perte de masse témoin / perte de masse échantillon]

Les résultats sont exprimés en base 100. Une performance pour l'échantillon supérieure à 100 est considérée comme meilleure que le témoin.

*Propriétés dynamiques (après cuisson)*

Les propriétés dynamiques $G^*$ et $\tan(\delta)$max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, à 60°C selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique ($G^*$) et le facteur de perte $\tan(\delta)$. Pour le cycle retour, on indique la valeur maximale de $\tan(\delta)$ observée ($\tan(\delta)$max), ainsi que l'écart de module complexe ($G^*$) entre les valeurs à 0,1% et à 50% de déformation (effet Payne). Pour les valeurs de $\tan(\delta)$max à 60°C, plus la valeur est basse, plus la composition aura une hystérèse faible et donc un échauffement faible.

*Déchirabilité*

Les indices de déchirabilité sont mesurés à deux températures : à 23°C et à 100°C. On détermine notamment la force à exercer pour obtenir la rupture (FRD, en N/mm) et on mesure la déformation à rupture (DRD, en %) sur une éprouvette de dimensions 10 x 85 x 2,5 mm entaillée au centre de sa longueur par 3 entailles sur une profondeur de 5 mm, pour provoquer la rupture de l'éprouvette. Ainsi on peut déterminer l'énergie pour provoquer la rupture (Energie) de l'éprouvette qui est le produit du FRD et DRD. Les résultats sont données en base 100, c'est-à-dire qu'on exprime les valeurs par rapport à un témoin, dont la déformation à rupture (DRD) est considéré comme la référence à 100.

*Temps de grillage (ou temps de fixation)*

Les mesures sont effectuées à 130°C, conformément à la norme française NF T 43-005. L'évolution de l'indice consistométrique en fonction du temps permet de déterminer le temps de fixation des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au-dessus de la valeur minimale mesurée pour cet indice.

*Microstructure des élastomères*

De façon générale, concernant la composition des élastomères, la microstructure est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500 MHz à des fréquences de 500.43 MHz pour l'observation du proton et 125.83 MHz pour l'observation du carbone. Pour les mesures sur des mélanges ou des élastomères non solubles mais ayant la capacité de gonfler dans un solvant, est utilisée une sonde HRMAS 4 mm z-grad permettant d'observer le proton et le carbone en mode découplé du proton. Les spectres sont acquis à des vitesses de rotation de 4000 Hz à 5000 Hz. Pour les mesures sur des élastomères solubles, est utilisée une sonde RMN liquide permettant d'observer le proton et le carbone en mode découplé du proton. La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier. Les séquences respectivement utilisées pour la RMN du proton et la RMN du carbone sont identiques pour un échantillon soluble et un échantillon gonflé. Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative. Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

V-2 Préparation des compositions

Dans les exemples qui suivent, les compositions caoutchouteuses ont été réalisées comme décrit au point II-5 ci-dessus. En particulier, on introduit dans un mélangeur interne (taux de remplissage final : environ 70% en volume), dont la température initiale de cuve est d'environ 80°C, successivement les élastomères diéniques, les charges renforçantes, ainsi que les divers autres ingrédients a l'exception du système de vulcanisation. On conduit alors un travail thermomécanique (phase non productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfamide sur un mélangeur (homo-finisseur) à 70°C, en mélangeant le tout (phase productive) pendant un temps approprié (par exemple une dizaine de minutes).

V-3 Essais de compositions de caoutchouc

Exemple 1 :

Cet exemple a pour but de montrer l'influence du taux d'incorporation de SBR fonctionnalisé à l'étain dans des compositions de la partie médiane de bande de roulement de pneumatiques d'avion sur le compromis de performance entre la résistance à l'usure et la conservation des propriétés mécaniques et thermiques.

T1, T2 et T3 sont des compositions témoins. T1 correspond à la composition d'une bande de roulement pour avion conventionnellement utilisée par l'homme du métier ; elle est à base de caoutchouc naturel comme seul élastomère. T2 correspond à une composition de bande de roulement dans laquelle le caoutchouc naturel a été remplacé par un SBR fonctionnel étain. T3 correspond à une composition de bande de roulement dans laquelle la moitié du caoutchouc naturel a été remplacé par un polybutadiène.

Les essais C1 à C3 sont conformes à l'invention. Les compositions C1 à C3 diffèrent par les taux respectifs de caoutchouc naturel et de SBR étain.

Les résultats de performance de perte de masse et d'allongement rupture à 60°C sont exprimés en pourcentage base 100 par rapport à la composition témoin T1, correspondant aux compositions de bande de roulement usuelles.

Le tableau 2 présente les compositions testées (en pce), ainsi que les résultats obtenus.

Tableau 2

|  | T1 | C1 | C2 | C3 | T2 | T3 |
|---|---|---|---|---|---|---|
| NR (1) | 100 | 70 | 50 | 25 | - | 50 |
| SBR (2) | - | 30 | 50 | 75 | 100 | - |
| BR (3) | - | - | - | - | - | 50 |
| Noir de carbone (4) | 49 | 49 | 49 | 49 | 49 | 49 |
| Antioxydant (5) | 1.5 | 1.5 | 1.5 | 1.5 | 1.5 | 1.5 |

(suite)

|  | T1 | C1 | C2 | C3 | T2 | T3 |
|---|---|---|---|---|---|---|
| Cire anti-ozone | 1 | 1 | 1 | 1 | 1 | 1 |
| Acide stéarique | 2.5 | 2.5 | 2.5 | 2.5 | 2.5 | 2.5 |
| Oxyde de zinc (6) | 3 | 3 | 3 | 3 | 3 | 3 |
| Accélérateur (7) | 0.85 | 0.85 | 0.85 | 0.85 | 0.85 | 0.85 |
| Soufre | 1.6 | 1.6 | 1.6 | 1.6 | 1.6 | 1.6 |
|  |  |  |  |  |  |  |
| Performance Perte de masse en % base 100 par rapport à T1 | 100 | 105 | 114 | 126 | 157 | 102 |
| Allongement rupture à 60°C en % base 100 par rapport à T1 | 100 | 91 | 82 | 80 | 59 | 85 |
| Tan delta max à 60°C | 0.19 | 0.18 | 0.18 | 0.17 | 0.17 | 0.17 |

(1) Caoutchouc naturel
(2) SBR solution fonctionnalisé étain avec 24 % de motifs polybutadiène 1,2 - 15.5 % de motifs styrène - Tg = -65°C
(3) Polybutadiène néodyme 98% 1,4 cis - Tg = -108°C
(4) Noir de carbone de grade N234 selon la norme ASTM D-1765
(5) N-1,3-diméthylbutyl-N-phénylparaphénylènediamine « Santoflex 6-PPD » de la société Flexsys
(6) Oxyde de zinc de grade industriel de la société Umicore
(7) N-cyclohexyl-2-benzothiazyle sulfénamide « Santocure CBS » de la société Flexsys

Les résultats présentés dans le tableau 2 ci-dessus montrent que la performance perte de masse, représentative d'une meilleure résistance à l'usure lors de la phase d'atterrissage, des compositions C1 à C3 est toujours significativement améliorée par rapport au témoin.

Par ailleurs, ces compositions C1 à C3 présentent un allongement rupture à 60°C inférieur de 20% par rapport au témoin T1 (composition d'une bande de roulement pour avion conventionnellement utilisée par l'homme du métier pour fabriquer une bande de roulement de pneumatique avion) qui reste un niveau acceptable des propriétés mécaniques. Au-delà de 20% de baisse par rapport à T1, il peut être considéré que les propriétés mécaniques pourraient ne plus être considérée comme suffisantes pour que la composition de bande de roulement soit utilisé sur des pneumatiques d'avion.

Les résultats ci-dessus montrent également que la stabilité thermique de la composition, représentée par les valeurs de Tan delta max à 60°C, est maintenue, voire même améliorée, par rapport au témoin T1.

Comme le montrent les résultats de la composition T2, l'absence de caoutchouc naturel dans la composition engendre une forte baisse des propriétés mécaniques. En outre, la composition T3 correspondant à une composition de bande de roulement dans laquelle la moitié du caoutchouc naturel a été remplacé par un polybutadiène ne permet pas d'améliorer significativement la résistance à l'usure.

Ainsi, seules les compositions médianes conformes à l'invention ont pour avantage de permettre une meilleure résistance à l'usure de la partie médiane de la bande de roulement lors de la phase d'atterrissage de l'avion, tout en maintenant, voire améliorant les propriété thermique de la composition et en conservant les propriétés mécaniques à un niveau acceptable. On observe que l'utilisation de 45 à 75 pce de SBR étain dans la composition conduit à un meilleur compromis de performance entre la résistance à l'usure et le maintien des propriétés thermiques et mécaniques.

Exemple 2 :

Cet exemple a pour but de montrer l'influence de l'incorporation d'autres élastomères diéniques en plus du SBR fonctionnalisés étain sur le compromis de performance entre la résistance à l'usure et la conservation des propriétés mécaniques et thermiques de la partie médiane de la bande de roulement.

C2 correspond à la composition C2 de l'Exemple 1. Elle correspond à un mode de réalisation de l'invention dans lequel seul le SBR fonctionnalisé à l'étain est présent en plus de l'élastomère diénique.

Les essais C4 et C5 sont également conformes à la composition de caoutchouc médiane selon l'invention. Les compositions C4 et C5 comprennent des élastomères synthétiques complémentaires de nature différente comme indiqué dans le tableau 3 ci-dessous.

Les résultats de performance de perte de masse et d'allongement rupture à 60°C sont exprimés en pourcentage base 100 par rapport à la composition témoin T1 de l'Exemple 1.

Le tableau 3 présente les compositions testées (en pce), ainsi que les résultats obtenus.

Tableau 3

| | C2 | C4 | C5 |
|---|---|---|---|
| NR (1) | 50 | 35 | 30 |
| SBR (2) | 50 | 45 | - |
| SBR (8) | - | - | 20 |
| BR (3) | - | 20 | - |
| VCR412 (9) | - | - | 50 |
| Noir de carbone (4) | 49 | 49 | 49 |
| Antioxydant (5) | 1.5 | 1.5 | 1.5 |
| Cire anti-ozone | 1 | 1 | 1 |
| Acide stéarique | 2.5 | 2.5 | 2.5 |
| Oxyde de zinc (6) | 3 | 3 | 3 |
| Accélérateur (7) | 0.85 | 0.85 | 0.85 |
| Soufre | 1.6 | 1.6 | 1.6 |
| | | | |
| Performance Perte de masse en % base 100 par rapport à T1 | 114 | 118 | 138 |
| Allongement rupture à 60°C en % base 100 par rapport à T1 | 82 | 108 | 95 |
| Tan delta à 60°C | 0.18 | 0.18 | 0.20 |

(1) à (7) : voir Tableau 2
(8) SBR solution fonctionnalisé étain avec 24 % de motifs polybutadiène 1,2 - 26.5 % de motifs styrène - Tg = -48°C
(9) « VCR412 UBEPOL » de la société UBE - polybutadiène composite : 12% de polybutadiène 1,2 syndiotactique dans une matrice polybutadiène 1,4-cis.

Les résultats présentés dans le tableau 3 ci-dessus montrent que la performance perte de masse, représentative d'une meilleure résistance à l'usure lors de la phase d'atterrissage, des compositions C4 et C5 est toujours significativement améliorée par rapport au témoin T1, et sont comparables, voire supérieurs à la composition C2 conforme à la présente invention.

Par ailleurs, ces compositions présentent un allongement rupture à 60°C bien inférieur à 20%, voire supérieure, par rapport au témoin T1, et la stabilité thermique de la composition est également maintenue par rapport au témoin T1. Ces résultats sont comparables, voire supérieurs à la composition C2 conforme à la présente invention.

Ainsi, les compositions de caoutchouc médianes conformes à l'invention, qu'elles comprennent ou non un autre élastomère diénique en plus de l'élastomère isoprénique et du SBR fonctionnalisé à l'étain, ont pour avantage de fournir une meilleure résistance à l'usure lors de la phase d'atterrissage de l'avion, tout en maintenant, voire améliorant les propriétés thermiques de la composition et en conservant de bonnes propriétés mécaniques.

Exemple 3 :

Ces exemples ont pour but de montrer l'influence de l'incorporation d'une résine hydrocarbonée composée majoritairement de motifs dicyclopentadiènes et aromatiques dans des compositions de bande de roulement de pneumatiques d'avion sur le compromis de performance entre la résistance à la coupure et le temps de fixation. Trois types de matrices élastomères ont été testées.

Les tableaux 4 et 5 présentent l'ensemble des compositions testées (en pce), ainsi que les résultats obtenus.

T4 et T5 sont des compositions témoins. Les compositions C6 à C12 sont conformes à l'invention.

Les résultats de performance en allongement rupture à 23°C et à 100 °C sont exprimés en pourcentage base 100 par rapport à la composition témoin, de même pour les résultats de performance en résistance à la déchirabilité à 23°C et à 100°C. L'augmentation du temps de fixation est exprimée en minutes par rapport au témoin.

Tableau 4

| | T4 | C6 | C7 | C8 | C9 |
|---|---|---|---|---|---|
| NR (1) | 50 | 50 | 50 | 50 | 50 |
| SBR (2) | 50 | 50 | 50 | 50 | 50 |
| Noir de carbone (10) | 49 | 49 | 49 | 49 | 49 |
| Silice (12) | 5 | 5 | 5 | 5 | 5 |
| Agent de couplage (13) | 1 | 1 | 1 | 1 | 1 |
| Résine hydrocarbonée (11) | 0 | 2,5 | 5 | 7,5 | 10 |
| Antioxydant (5) | 1,5 | 1,5 | 1,5 | 1,5 | 1,5 |
| Cire anti-ozone | 1 | 1 | 1 | 1 | 1 |
| Acide stéarique | 2,5 | 2,5 | 2,5 | 2,5 | 2,5 |
| ZnO (6) | 3 | 3 | 3 | 3 | 3 |
| Accélérateur (7) | 0,8 | 0,8 | 0,8 | 0,8 | 0,8 |
| Soufre | 1,5 | 1,5 | 1,5 | 1,5 | 1,5 |
| | | | | | |
| Allongement rupture à 23°C (base 100) | 100 | 104 | 116 | 121 | 123 |
| Allongement rupture à 100°C (base 100) | 100 | 115 | 130 | 142 | 157 |
| DRD à 23°C (base 100) | 100 | 113 | 143 | 177 | 189 |
| DRD à 100°C (base 100) | 100 | 113 | 144 | 179 | 108 |
| Augmentation temps de grillage (minutes) | 0 | 15 | 17 | 20 | 22 |

(1), (2), (5) à (7) : voir Tableau 2
(10) Noir de carbone de grade N115 selon la norme ASTM D-1765
(11) Résine hydrocarbonée DCPD/Aromatique «Novares TC160» de la société Rütgers Mn=710g/mol ; Mw=2000g/mol ; Ip=2,8, Tg=106°C. Protons Aromatiques : 13%, Protons éthyléniques : 5,6%, Protons Aliphatiques : 81,4%
(12) Silice « Zeosil 1165 MP » de la société Solvay- Rhodia type « HDS »
(13) Silane

Tableau 5

| | T5 | C10 | C11 | C12 |
|---|---|---|---|---|
| NR (1) | 35 | 35 | 35 | 35 |
| SBR (2) | 65 | 65 | 65 | 65 |
| Noir de carbone (10) | 49 | 49 | 49 | 49 |
| Silice (12) | 5 | 5 | 5 | 5 |
| Agent de couplage (13) | 1 | 1 | 1 | 1 |
| Résine hydrocarbonée (11) | 0 | 5 | 7,5 | 10 |
| Antioxydant (5) | 1,5 | 1,5 | 1,5 | 1,5 |
| Cire anti-ozone | 1 | 1 | 1 | 1 |
| Acide stéarique | 2,5 | 2,5 | 2,5 | 2,5 |
| ZnO (6) | 3 | 3 | 3 | 3 |
| Accélérateur (7) | 0,8 | 0,8 | 0,8 | 0,8 |
| Soufre | 1,5 | 1,5 | 1,5 | 1,5 |
| | | | | |

(suite)

|  | T5 | C10 | C11 | C12 |
|---|---|---|---|---|
| Allongement rupture à 23°C (base 100) | 100 | 116 | 128 | 132 |
| Allongement rupture à 100°C (base 100) | 100 | 101 | 102 | 99 |
| DRD à 23°C (base 100) | 100 | 146 | 147 | 216 |
| DRD à 100°C (base 100) | 100 | 131 | 149 | 162 |
| Augmentation temps de fixation (minutes) | 0 | 18 | 20 | 22 |
| (1), (2), (5) à (7) : voir Tableau 2<br>(10) à (13) : voir Tableau 4 | | | | |

Ces résultats montrent que les performances en résistance à la coupure telle que représentée par les mesures d'allongement rupture et de déchirabilité, à la fois à 23°C et 100°C, sont très améliorées par l'invention. De même, le temps de grillage est allongé de manière importante, permettant d'augmenter la productivité industrielle lors de la fabrication des pneumatiques d'avion.

Exemple 4 :

Ces exemples ont pour but de montrer l'influence de l'incorporation d'une résine hydrocarbonée spécifique dans des compositions de caoutchouc médiane de bande de roulement de pneumatiques d'avion sur le compromis de performance entre la résistance à la coupure et la processabilité. Deux types de matrices élastomères ont été testés.
Le tableau 6 présente l'ensemble des compositions testées (en pce) ainsi que les résultats obtenus.
T6 est une composition témoin. Les compositions C13 à C15 sont conformes à l'invention.
Les résultats de performance en allongement rupture à 23°C et à 100 °C sont exprimés en pourcentage base 100 par rapport à la composition témoin, de même pour les résultats de performance en résistance à la déchirabilité à 23°C et à 100°C. La processabilité est représentée par les valeurs de viscosité Mooney en unités Mooney.

Tableau 6

|  | T6 | C13 | C14 | C15 |
|---|---|---|---|---|
| NR (1) | 50 | 50 | 50 | 50 |
| SBR (2) | 50 | 50 | 50 | 50 |
| Noir de carbone (10) | 49 | 49 | 49 | 49 |
| Silice (12) | 5 | 5 | 5 | 5 |
| Agent de couplage (13) | 1 | 1 | 1 | 1 |
| Résine hydrocarbonée (14) | 0 | 5 | 7,5 | 10 |
| Antioxydant (5) | 1,5 | 1,5 | 1,5 | 1,5 |
| Cire anti-ozone | 1 | 1 | 1 | 1 |
| Acide stéarique | 2,5 | 2,5 | 2,5 | 2,5 |
| ZnO (6) | 3 | 3 | 3 | 3 |
| Accélérateur (7) | 0,8 | 0,8 | 0,8 | 0,8 |
| Soufre | 1,5 | 1,5 | 1,5 | 1,5 |
|  |  |  |  |  |
| Allongement rupture à 23°C (base 100) | 100 | 112 | 121 | 122 |
| Allongement rupture à 100°C (base 100) | 100 | 130 | 143 | 159 |
| DRD à 23°C (base 100) | 100 | 152 | 185 | 190 |
| DRD à 100°C (base 100) | 100 | 162 | 198 | 230 |

(suite)

|  | T6 | C13 | C14 | C15 |
|---|---|---|---|---|
| Viscosité Mooney (UM) | 94 | 89 | 87 | 87 |
| (1), (2), (5) à (7) : voir Tableau 2<br>(10), (12) et (13) : voir Tableau 4<br>(14) Résine hydrocarbonée DCPD/Aromatique «Nevroz 1420» de la société Neville Mn=913g/mol ; Mw=3540g/mol ; Ip=3,9, Tg=90°C. Protons Aromatiques : 3%, Protons éthyléniques : 5%, Protons Aliphatiques : 92%, comprenant également des en outre des unités provenant des dérivés du pin | | | | |

L'ensemble des résultats montre que les performances en résistance à la coupure telle que représentée par les mesures d'allongement rupture et de déchirabilité, à la fois à 23°C et 100°C, sont très améliorées par le mode de réalisation de l'invention selon lequel la composition de caoutchouc médiane de la bande de roulement comprend au moins une résine hydrocarbonée majoritairement composée d'unités issues de monomères aromatiques et cycloaliphatiques. Dans le même temps, la viscosité Mooney est diminuée dans les compositions utiles à l'invention, permettant d'augmenter la productivité industrielle lors de la fabrication des pneumatiques d'avion.

En résumé, les compositions de caoutchouc médiane conformes à l'invention, à base d'au moins notamment de 25 à 85 pce d'un copolymère butadiénique et styrénique fonctionnalisé à l'étain et de 15 à 75 pce d'élastomère isoprénique, constitutives de la partie médiane de la bande de roulement d'un pneumatique pour avion, confèrent au pneumatique une performance de résistance à l'usure toucher, lors de l'atterrissage fortement améliorée.

Sur la base de ces résultats, il est estimé qu'un pneumatique selon l'invention, par rapport au pneumatique de référence, permet un gain global en durée de vie sur usure sur l'ensemble du cycle d'utilisation du pneumatique comprenant les phases d'atterrissage, de roulage et de freinage.

Ce gain en durée de vie sur usure du pneumatique selon l'invention, obtenu grâce à une usure plus régulière de la bande de roulement, présente également un avantage au niveau du rechapage du pneumatique, c'est-à-dire du remplacement de la bande de roulement usée du pneumatique en fin de vie.

Pour un pneumatique de l'état de la technique en fin de vie, pour lequel la bande de roulement présente une usure différentielle entre la partie médiane et les parties latérales, l'opération de rechapage nécessite le plus souvent, outre l'enlèvement de la bande de roulement usée, l'enlèvement de la couche de sommet la plus radialement extérieure, constituée généralement par des renforts métalliques et appelée couche de protection, ladite couche de protection étant souvent endommagée en fin de vie du pneumatique en raison de sa proximité avec la bande de roulement.

Pour un pneumatique selon l'invention, du fait d'une usure plus régulière sur la largeur axiale de la bande de roulement, l'enlèvement de la couche de protection n'est plus nécessaire, du fait de son intégrité en fin de vie du pneumatique, d'où un gain économique sur l'opération de rechapage.

## Revendications

1. Pneumatique (1) pour avion comprenant une bande de roulement (2) ayant une largeur axiale L, la bande de roulement (2) comprenant :

   - une partie médiane (3) ayant une largeur axiale $L_C$ au moins égale à 50% et au plus égale à 80% de la largeur axiale L de la bande de roulement et constituée par une composition de caoutchouc médiane,
   - et deux parties latérales (41, 42), positionnées axialement de part et d'autre de la partie médiane (3), ayant chacune une largeur axiale ($L_{S1}$, $L_{S2}$) au moins égale à 10% et au plus égale à 25% de la largeur axiale L de la bande de roulement et constituées chacune par une composition de caoutchouc latérale,
   caractérisé en ce que la composition de caoutchouc médiane comprend au moins une matrice élastomérique, une charge renforçante et un système de réticulation, ladite matrice élastomérique comprenant de 25 à 85 partie en poids pour cent parties en poids d'élastomère, pce, d'un copolymère butadiénique et styrénique fonctionnalisé à l'étain et de 15 à 75 pce d'élastomère isoprénique, le taux total d'élastomère isoprénique et de copolymère butadiénique et styrénique fonctionnalisé à l'étain dans la composition de caoutchouc médiane étant compris dans un domaine allant de 45 à 100 pce,
   en ce qu'au moins une composition de caoutchouc latérale est différente de la composition de caoutchouc médiane,
   et en ce que l'au moins une composition de caoutchouc latérale comprend au moins un élastomère diénique, une charge renforçante et un système de réticulation, lequel l'élastomère diénique comprend majoritairement au moins un élastomère isoprénique.

**2.** Pneumatique (1) selon la revendication 1, dans lequel le taux de l'élastomère isoprénique dans la composition de caoutchouc médiane est compris dans un domaine allant de 20 à 65 pce, de préférence de 25 à 60 pce.

**3.** Pneumatique (1) selon l'une quelconque des revendications précédentes, dans lequel le taux de copolymère butadiénique et styrénique fonctionnalisé à l'étain dans la composition de caoutchouc médiane est compris dans un domaine allant de 35 à 80, de préférence de 40 à 75 pce.

**4.** Pneumatique (1) selon l'une quelconque des revendications précédentes, dans lequel la matrice élastomérique de la composition de caoutchouc médiane comprend de plus de 0 à 55 pce, de préférence de plus de 0 à 50 pce d'un autre élastomère diénique.

**5.** Pneumatique (1) selon la revendication 4, dans lequel l'autre élastomère diénique de la composition de caoutchouc médiane est choisi dans le groupe constitué par les copolymères butadiéniques et styréniques non-fonctionnalisés à l'étain, les polybutadiènes et leurs mélanges.

**6.** Pneumatique (1) selon l'une quelconque des revendications précédentes, dans lequel la charge renforçante de la composition de caoutchouc médiane comprend du noir de carbone et/ou une charge inorganique renforçante, de préférence la charge renforçante de la composition de caoutchouc médiane comprend majoritairement, de préférence exclusivement, du noir du carbone.

**7.** Pneumatique (1) selon l'une quelconque des revendications précédentes, dans lequel le taux de charge renforçante, de préférence de noir de carbone, dans la composition de caoutchouc médiane est compris dans un domaine allant de 20 à 100 pce, de préférence de 25 à 75 pce, de préférence encore de 30 à 70 pce.

**8.** Pneumatique (1) selon l'une quelconque des revendications précédentes, dans lequel de la composition de caoutchouc médiane comprend en outre de 1 à 30 pce d'au moins une résine hydrocarbonée majoritairement composée d'unités issues de monomères aromatiques et cycloaliphatiques.

**9.** Pneumatique (1) selon la revendication 8, dans lequel la résine hydrocarbonée majoritairement composée d'unités issues de monomères aromatiques et cycloaliphatiques est telle que les monomères cycloaliphatiques sont choisis dans le groupe constitué par le cyclopentadiène, le dicyclopentadiène et leurs mélanges, et les monomères aromatiques sont choisis dans le groupe constitué par le styrène, l'alpha-méthyl styrène, le vinyle toluène, l'indène et leurs mélanges.

**10.** Pneumatique (1) selon l'une quelconque des revendications 8 ou 9, dans lequel la résine hydrocarbonée majoritairement composée d'unités issues de monomères aromatiques et cycloaliphatiques présente un taux de proton aromatique compris entre 0 et 12%, un taux de proton éthylénique supérieur à 3%, une masse moyenne moléculaire en nombre supérieure à 500 g/mol et un indice de polymolécularité supérieur à 2.

**11.** Pneumatique (1) selon l'une quelconque des revendications précédentes, dans lequel la composition de caoutchouc latérale comprend plus de 85 pce, de préférence au moins 90 pce d'au moins un élastomère isoprénique.

**12.** Pneumatique (1) selon l'une quelconque des revendications précédentes, dans lequel les deux parties latérales (41, 42), positionnées axialement de part et d'autre de la partie médiane (3), sont différentes de la composition de caoutchouc médiane.

**13.** Pneumatique (1) selon l'une quelconque des revendications précédentes, dans lequel les deux parties latérales (41, 42), positionnées axialement de part et d'autre de la partie médiane (3), sont constituées par des compositions de caoutchouc latérales identiques.

**14.** Pneumatique (1) selon l'une quelconque des revendications précédentes, dans lequel les deux parties latérales (41, 42), positionnées axialement de part et d'autre de la partie médiane (3), ont des largeurs axiales (LS1, LS2) identiques.

**Patentansprüche**

**1.** Flugzeugreifen (1) mit einer Lauffläche (2) mit einer axialen Breite L, wobei die Lauffläche (2) Folgendes umfasst:

- einen mittleren Teil (3) mit einer axialen Breite $L_C$, die mindestens gleich 50 % und höchstens gleich 80 % der axialen Breite L der Lauffläche ist und aus einer mittleren Kautschukzusammensetzung besteht,

- und zwei seitliche Teile (41, 42), die axial auf jeder Seite des mittleren Teils (3) positioniert sind, jeweils eine axiale Breite ($L_{S1}$, $L_{S2}$), die mindestens gleich 10 % und höchstens gleich 25 % der axialen Breite L der Lauffläche ist, aufweisen und jeweils aus einer seitlichen Kautschukzusammensetzung bestehen, **dadurch gekennzeichnet, dass** die mittlere Kautschukzusammensetzung mindestens eine Elastomermatrix, einen verstärkenden Füllstoff und ein Vernetzungssystem umfasst, wobei die Elastomermatrix 25 bis 85 Gewichtsteile pro hundert Gewichtsteile Elastomer, phe, eines zinnfunktionalisierten Butadien-Styrol-Copolymers und 15 bis 75 phe Isopren-Elastomer umfasst, wobei der Gesamtgehalt an Isopren-Elastomer und zinnfunktionalisiertem Butadien-Styrol-Copolymer in der mittleren Kautschukzusammensetzung in einem Bereich von 45 bis 100 phe liegt,

dass mindestens eine seitliche Kautschukzusammensetzung von der mittleren Kautschukzusammensetzung verschieden ist,

und dass die mindestens eine seitliche Kautschukzusammensetzung mindestens ein Dienelastomer, einen verstärkenden Füllstoff und ein Vernetzungssystem umfasst, wobei das Dienelastomer hauptsächlich mindestens ein Isopren-Elastomer umfasst.

2. Reifen (1) nach Anspruch 1, wobei der Gehalt an Isopren-Elastomer in der mittleren Kautschukzusammensetzung in einem Bereich von 20 bis 65 phe, vorzugsweise von 25 bis 60 phe, liegt.

3. Reifen (1) nach einem der vorhergehenden Ansprüche, wobei der Gehalt an zinnfunktionalisiertem Butadien-Styrol-Copolymer in der mittleren Kautschukzusammensetzung in einem Bereich von 35 bis 80 phe, vorzugsweise von 40 bis 75 phe, liegt.

4. Reifen (1) nach einem der vorhergehenden Ansprüche, wobei die Elastomermatrix der mittleren Kautschukzusammensetzung ferner 0 bis 55 phe, vorzugsweise mehr als 0 bis 50 phe, eines anderen Dienelastomers umfasst.

5. Reifen (1) nach Anspruch 4, wobei das andere Dienelastomer der mittleren Kautschukzusammensetzung aus der Gruppe bestehend aus nicht zinnfunktionalisierten Butadien-Styrol-Copolymeren, Polybutadienen und Mischungen davon ausgewählt ist.

6. Reifen (1) nach einem der vorhergehenden Ansprüche, wobei der verstärkende Füllstoff der mittleren Kautschukzusammensetzung Ruß und/oder einen verstärkenden anorganischen Füllstoff umfasst, wobei der verstärkende Füllstoff der mittleren Kautschukzusammensetzung vorzugsweise hauptsächlich, vorzugsweise ausschließlich, Ruß umfasst.

7. Reifen (1) nach einem der vorhergehenden Ansprüche, wobei der Gehalt an verstärkendem Füllstoff, vorzugsweise Ruß, in der mittleren Kautschukzusammensetzung in einem Bereich von 20 bis 100 phe, vorzugsweise von 25 bis 75 phe, weiter bevorzugt von 30 bis 70 phe, liegt.

8. Reifen (1) nach einem der vorangehenden Ansprüche, wobei die mittlere Kautschukzusammensetzung ferner 1 bis 30 phe mindestens eines Kohlenwasserstoffharzes, das hauptsächlich aus Einheiten besteht, die von aromatischen und cycloaliphatischen Monomeren stammen, umfasst.

9. Reifen (1) nach Anspruch 8, wobei das Kohlenwasserstoffharz, das hauptsächlich aus Einheiten besteht, die von aromatischen und cycloaliphatischen Monomeren stammen, derart beschaffen ist, dass die cycloaliphatischen Monomere aus der Gruppe bestehend aus Cyclopentadien, Dicyclopentadien und Mischungen davon ausgewählt sind und die aromatischen Monomere aus der Gruppe bestehend aus Styrol, alpha-Methylstyrol, Vinyltoluol, Inden und Mischungen davon ausgewählt sind.

10. Reifen (1) nach einem der Ansprüche 8 oder 9, wobei das Kohlenwasserstoffharz, das hauptsächlich aus Einheiten besteht, die von aromatischen und cycloaliphatischen Monomeren stammen, einen Gehalt an aromatischen Protonen zwischen 0 und 12 %, einen Gehalt an ethylenischen Protonen von mehr als 3 %, eine zahlenmittlere Molmasse von mehr als 500 g/mol und einen Polydispersitätsindex von mehr als 2 aufweist.

11. Reifen (1) nach einem der vorhergehenden Ansprüche, wobei die seitliche Kautschukzusammensetzung mehr als 85 phe, vorzugsweise mindestens 90 phe, mindestens eines Isopren-Elastomers umfasst.

12. Reifen (1) nach einem der vorhergehenden Ansprüche, wobei die beiden seitlichen Abschnitte (41, 42), die axial auf jeder Seite des mittleren Teils (3) angeordnet sind, von der mittleren Kautschukzusammensetzung verschieden sind.

13. Reifen (1) nach einem der vorhergehenden Ansprüche, wobei die beiden seitlichen Teile (41, 42), die axial auf jeder Seite des mittleren Teils (3) angeordnet sind, aus den gleichen seitlichen Kautschukzusammensetzungen bestehen.

14. Reifen (1) nach einem der vorhergehenden Ansprüche, wobei die beiden seitlichen Teile (41, 42), die axial auf jeder Seite des mittleren Teils (3) angeordnet sind, gleiche axiale Breiten (LS1, LS2) aufweisen.

**Claims**

1. Aircraft tyre (1), comprising a tread (2) having an axial width L, the tread (2) comprising:

   - a middle portion (3) having an axial width $L_C$ at least equal to 50% and at most equal to 80% of the axial width L of the tread and consisting of a middle rubber composition,
   - and two lateral portions (41, 42) positioned axially on either side of the middle portion (3), each having an axial width ($L_{S1}$, $L_{S2}$) at least equal to 10% and at most equal to 25% of the axial width L of the tread and each consisting of a lateral rubber composition,
   **characterized in that** the middle rubber composition comprises at least one elastomeric matrix, a reinforcing filler and a crosslinking system, said elastomeric matrix comprising from 25 to 85 parts by weight per hundred parts by weight of elastomer, phr, of a tin-functionalized butadiene and styrene copolymer and from 15 to 75 phr of isoprene elastomer, the total content of isoprene elastomer and of butadiene and of tin-functionalized butadiene and styrene copolymer in the middle rubber composition being within a range extending from 45 to 100 phr,
   **in that** at least one lateral rubber composition is different from the middle rubber composition,
   and **in that** the at least one lateral rubber composition comprises at least one diene elastomer, a reinforcing filler and a crosslinking system, which the diene elastomer predominantly comprises at least one isoprene elastomer.

2. Tyre (1) according to Claim 1, wherein the content of the isoprene elastomer in the middle rubber composition is within a range extending from 20 to 65 phr, preferably from 25 to 60 phr.

3. Tyre (1) according to either one of the preceding claims, wherein the content of tin-functionalized butadiene and styrene polymer in the middle rubber composition is within a range extending from 35 to 80, preferably from 40 to 75 phr.

4. Tyre (1) according to any one of the preceding claims, wherein the elastomeric matrix of the middle rubber composition comprises more than 0 to 55 phr, preferably more than 0 to 50 phr of another diene elastomer.

5. Tyre (1) according to Claim 4, wherein the other diene elastomer of the middle rubber composition is selected from the group consisting of non-tin-functionalized butadiene and styrene copolymers, polybutadienes, and mixtures thereof.

6. Tyre (1) according to any one of the preceding claims, wherein the reinforcing filler of the middle rubber composition comprises carbon black and/or a reinforcing inorganic filler, preferably the reinforcing filler of the middle rubber composition comprises predominantly, preferably exclusively, carbon black.

7. Tyre (1) according to any one of the preceding claims, wherein the content of reinforcing filler, preferably of carbon black, in the middle rubber composition is within a range extending from 20 to 100 phr, preferably from 25 to 75 phr, more preferably from 30 to 70 phr.

8. Tyre (1) according to any one of the preceding claims, wherein the middle rubber composition also comprises from 1 to 30 phr of at least one hydrocarbon-based resin predominantly composed of units derived from aromatic and cycloaliphatic monomers.

9. Tyre (1) according to Claim 8, wherein the hydrocarbon-based resin predominantly composed of units derived from aromatic and cycloaliphatic monomers is such that the cycloaliphatic monomers are selected from the group consisting of cyclopentadiene, dicyclopentadiene and mixtures thereof, and the aromatic monomers are selected from the group consisting of styrene, alpha-methylstyrene, vinyltoluene, indene and mixtures thereof.

10. Tyre (1) according to either one of Claims 8 and 9, wherein the hydrocarbon-based resin predominantly composed of units derived from aromatic and cycloaliphatic monomers has an aromatic proton content of between 0 and 12%, an ethylenic proton content greater than 3%, a number-average molecular weight greater than 500 g/mol and a polydispersity index greater than 2.

11. Tyre (1) according to any one of the preceding claims, wherein the lateral rubber composition comprises more than 85 phr, preferably at least 90 phr of at least one isoprene elastomer.

12. Tyre (1) according to any one of the preceding claims, wherein the two lateral portions (41, 42), positioned axially on either side of the middle portion (3), are different from the middle rubber composition.

13. Tyre (1) according to any one of the preceding claims, wherein the two lateral portions (41, 42), positioned axially on either side of the middle portion (3), are formed by identical lateral rubber compositions.

14. Tyre (1) according to any one of the preceding claims, wherein the two lateral portions (41, 42), positioned axially on either side of the middle portion (3), have identical axial widths (LS1, LS2).

FIG. 1

EP 3 890 992 B1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1163120 A
- EP 1381525 A
- EP 1477333 A
- EP 2310213 A
- WO 2017017123 A1
- WO 2011042507 A
- US 3393182 A
- WO 9736724 A
- WO 9916600 A
- WO 2006069792 A
- WO 2006069793 A
- WO 2008003434 A
- WO 2008003435 A
- WO 0316837 A
- WO 02083782 A
- WO 0230939 A
- WO 0231041 A

- WO 2007061550 A
- WO 2006125532 A
- WO 2006125533 A
- WO 2006125534 A
- US 6849754 B
- WO 9909036 A
- WO 2006023815 A
- WO 2007098080 A
- WO 2010072685 A
- WO 2008055986 A
- WO 0210269 A
- EP 0501227 A
- EP 0735088 A
- EP 0810258 A
- WO 0005300 A
- WO 0005301 A

**Littérature non-brevet citée dans la description**

- **BRUNAUER-EMMETT-TELLER**. *The Journal of the American Chemical Society*, February 1938, vol. 60, 309
- **R. MILDENBERG** ; **M. ZANDER** ; **G. COLLIN**. Hydrocarbon Resins. VCH, 1997

- Computational Modeling of Tires. **S. K. CLARK**. Touchdown dynamics. Precision Measurement Company, 1995, 9-19